# FASCICULE DE BREVET EUROPEEN

(11) **EP 0 463 952 B1**
(45) Date de publication et mention de la délivrance du brevet: **20.04.1994**
(21) Numéro de dépôt: 91401696.9
(22) Date de dépôt: 24.06.1991
(51) Int. Cl.: A01D 75/08

(54) **Procédé pour l'affûtage des couteaux d'un tambour rotatif et le réglage du contre-couteau fixe coopérant avec ceux-ci et dispositif mettant en oeuvre ce procédé**
Verfahren zum Schleifen der Messer eines Drehzylinders und Einstellen des mit ihnen zusammenwirkenden festen Gegenmessers, und Vorrichtung zur Durchführung dieses Verfahrens
Method for sharpening the blades of a rotary drum and adjusting the fixed counter-cutter cooperating with them, and device for carrying out this method

(30) Priorité: 25.06.1990 FR 9007934
(43) Date de publication de la demande: 02.01.1992
(73) Titulaire: NEW HOLLAND BELGIUM N.V., B-8210 Zedelgem (BE)
(72) Inventeur: Martin, Jean-Paul, F-85800 Saint-Gilles-Croix-De-Vie (FR); Pambrun, Louis, FR-85000 La Roche-sur-Yon (FR); Beauchene, Henri, FR-85300 Challans (FR)
(74) Mandataire: Caunet, Jean

(56) Documents cités:
- EP-A- 0 242 464
- FR-A- 2 154 157
- GB-A- 2 028 191

## Description

Les hache-fourrages utilisés dans les récolteuses de fourrage comportent des cylindres ou tambours hacheurs qui tournent à grande vitesse et dont les couteaux coopèrent avec un contre-couteau fixe pour hacher des produits agricoles entrant sous forme de tiges, de feuilles ou autres, en menus morceaux ou éléments. La position du contre-couteau par rapport aux couteaux du tambour et l'état du fil des couteaux sont critiques pour obtenir un sectionnement convenable, une longueur uniforme des éléments coupés et une consommation d'énergie minimale.

Il est donc essentiel que le fil des couteaux reste parfait et que le jeu entre lesdits couteaux et le contre-couteau reste minimal. Dès lors, plusieurs affûtages des couteaux en enlevant le minimum à chaque fois, accompagnés d'un réglage du contre-couteau sont nécessaires chaque jour pour obtenir un bon résultat. Cela implique évidemment que toutes ces opérations soient effectuées très rapidement, en parfaite sécurité pour le personnel et le matériel.

Tel est le but général de la présente invention commun aux autres dispositifs déjà connus.

Des procédés selon le préambule de la revendication 1 et des dispositifs selon le préambule de la revendication 2 sont connus dans la pratique.

Cependant, dans ceux-ci, la fonction d'affûtage n'est pas liée à celle du réglage du contre-couteau. Pourtant, il y a avantage à effectuer simultanément ces opérations et c'est le but particulier de la présente invention dans le cadre du but général précité, grâce auquel on peut parvenir à une efficacité maximale de la machine et à un temps d'affûtage/réglage minimal.

Par ailleurs, la présente invention renonce aux systèmes électroniques complexes des dispositifs connus toujours difficiles à dépanner en milieu agricole et propose un dispositif mettant en oeuvre des principes de mécanique simple dont seul le contrôle est assuré par des moyens électriques ou électroniques eux-mêmes très simples.

Dans ce but et conformément à l'invention, le procédé proposé consiste :
- à amener, par pivotement autour de l'axe de rotation du tambour, au moins deux positionneurs alignés du contre-couteau, en regard d'une meule d'affûtage des couteaux, meule dont la situation angulaire est fixe,
- à rectifier les extrémités de ces positionneurs avec la meule, en même temps que celle-ci affûte les couteaux pendant la rotation du tambour,
- à ramener ensuite lesdits positionneurs en regard du contre-couteau par pivotement inverse,
- et à régler à nouveau le contre-couteau en appliquant des butées dont il est muni contre ces positionneurs.

Ce procédé est notamment mis en oeuvre dans un dispositif appliqué à une machine récolteuse de fourrage, laquelle comprend un tambour hacheur rotatif et un contre-couteau fixe coopérant avec les couteaux du tambour, ainsi qu'une meule escamotable susceptible d'être mise en rotation pour affûter périodiquement lesdits couteaux.

Suivant l'invention, dans ce dispositif, au moins deux positionneurs situés près des extrémités libres du tambour hacheur sont montés pivotants autour de l'axe géométique de celui-ci et reliés à un dispositif d'actionnement permettant d'amener par pivotement la touche extrême de chaque positionneur soit en regard de la meule pour être rectifiée au même diamètre que les couteaux sont affûtés par celle-ci, soit en regard d'une butée correspondante du contre-couteau, lequel est assujetti à un support fixe par l'intermédiaire d'une part d'un dispositif presseur tendant à appliquer ses butées contre les touches des positionneurs et d'autre part d'un dispositif de fixation.

Dans une forme de réalisation avantageuse, chaque positionneur est un bras faisant corps avec un anneau monté pivotant autour d'un tourillon du tambour hacheur, ce bras s'étendant vers la périphérie et comportant en bout une touche consommable montée de façon interchangeable.

Le dispositif d'actionnement comporte, pour chaque positionneur, une bielle dont une extrémité coudée est articulée sur l'anneau du positionneur considéré et dont l'autre extrémité convenablement guidée est attelée à un vérin prenant appui sur le bâti fixe de la machine.

L'extrémité de la bielle d'actionnement attelée au vérin est articulée en bout d'un levier monté pivotant dans sa partie médiane autour d'un axe fixe, les extrémités libres des leviers des deux positionneurs étant articulées sur une trappe longitudinale rigide assurant, d'une part, la fermeture d'un passage ménagé pour la meule escamotable dans le carter du tambour hacheur et, d'autre part, l'accouplement des deux bielles d'actionnement.

Le dispositif de fixation du contre-couteau comporte :
- d'une part, une règle fixe montée sur le bâti de la machine récolteuse pour supporter le contre-couteau et délimitant une glissière de guidage pour deux coins mobiles ayant des pentes opposées et susceptibles d'être rapprochés ou éloignés l'un de l'autre par un vérin,
- d'autre part, une règle flottante faisant corps avec des coins conjugués et reliée au contre-couteau reposant sur la règle fixe, par des vis traversant celle-ci

Le dispositif presseur appliquant les butées du contre-couteau contre les touches des positionneurs comporte au moins deux leviers dont une extrémité est articulée sur le contre-couteau, dont l'autre extrémité est reliée à un organe élastique et dont la partie médiane est montée pivotante autour d'un axe d'articulation du support fixe précité.

Chaque levier du dispositif presseur délimite, pour le passage de l'axe d'articulation du support fixe une lumière dont un bord d'appui est incliné pour que la réaction dudit axe à la force élastique ait pour effet non seulement d'appliquer les butées du contre-couteau contre les touches des positionneurs, mais également de presser ledit contre couteau sur le support fixe.

La meule rotative est montée sur un chariot mobile parallèlement à l'axe du tambour hacheur, le chariot étant réglable en distance relativement à celui-ci.

Le chariot porte-meule est, d'une part, monté coulissant le long de et pivotant autour d'une barre cylindrique de guidage et, d'autre part, relié à un chariot coopéant de réaction par un organe réglable d'accouplement, ce chariot coopérant de réaction étant monté coulissant sur cette barre et un autre élément parallèle de guidage.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:
- la figure 1 est un schéma illustrant le dispositif de l'invention en position d'attente pendant que le tambour hacheur fonctionne,
- la figure 2 est une vue analogue à la figure 1 montrant le même dispositif en position d'affûtage des couteaux et de réglage du contre-couteau,
- la figure 3 est un schéma partiel de principe, pris à plus grande échelle suivant la ligne III-III de la figure 2 et faisant ressortir l'intervention de la meule pour affûter les couteaux et rectifier les touches des positionneurs,
- la figure 4 est un schéma partiel complétant celui de la figure 3 et pris en coupe transversale à plus grande échelle suivant la ligne IV-IV de la figure 5 pour faire ressortir le positionnement subséquent du contre-couteau,
- la figure 5 est une élévation prise à plus grande échelle suivant la ligne V-V de la figure 2, montrant le dispositif de fixation du contre-couteau.
- la figure 6 est une élévation prise suivant la ligne VI-VI de la figure 5, montrant le dispositif presseur rapporté sur le contre-couteau et son dispositif de fixation.

La machine récolteuse n'est pas représentée et seul son tambour hacheur rotatif 1 apparaît en trait mixte sur le dessin par l'enveloppe extérieure des arêtes de coupe de couteaux 2 dont ce tambour est équipé. Ledit tambour est monté tournant sur un bâti fixe de la machine, bâti qui n'est pas davantage représenté et dont les points d'appui sont désignés par la référence 3.

Le tambour 1 comporte des tourillons extrêmes 4 dont une zone peu épaisse destinée à constituer une portée circulaire de pivotement, est seule représentée. Les parties 4 sont destinées au guidage en pivotement de deux anneaux 5 et 6 situés de part et d'autre du tambour 1 et prolongés chacun par un bras positionneur 7 muni d'une touche 8 interchangeable après l'usure due à des rectifications successives.

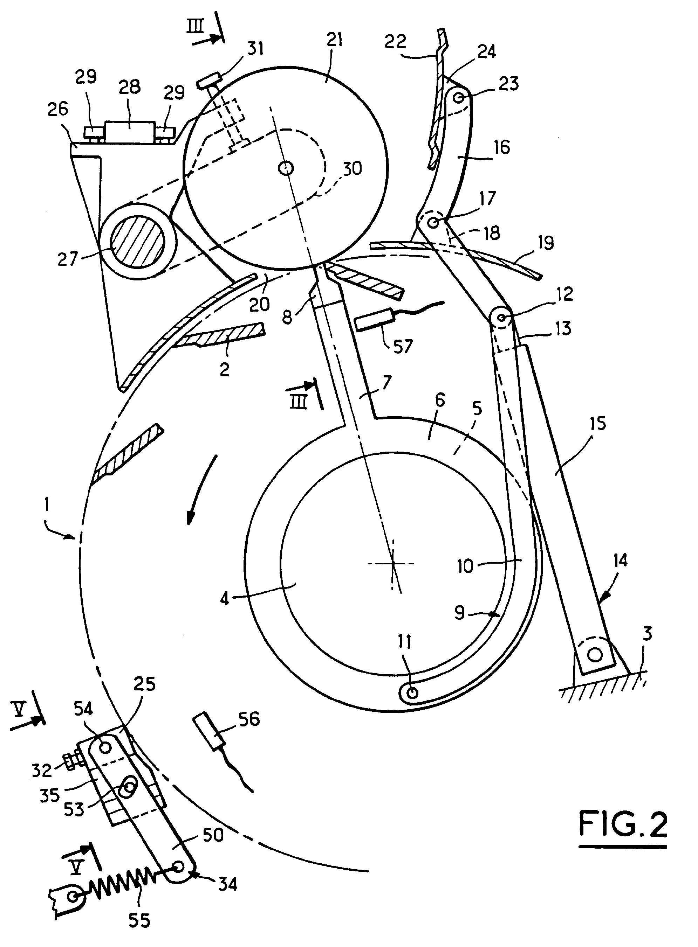

Un dispositif d'actionnement synchrone 9 des anneaux positionneurs 5 et 6 comporte, pour chaque anneau, une bielle d'accouplement 10 dont une extrémité coudée concentriquement à l'axe géométrique du tambour pour la position illustrée par la figure 2, est articulée au moyen d'un axe 11 sur l'anneau considéré, tandis que son autre extrémité est articulée au moyen d'un axe commun 12, d'une part, sur la tige de piston 13 d'un vérin 14 dont le cylindre 15 prend appui sur le bâti fixe 3, d'autre part, sur l'une des extrémités d'un levier cambré 16 monté pivotant autour d'un axe 17. Cet axe 17 est porté par une patte 18 d'un carter 19 rapporté sur le bâti fixe pour envelopper et protéger le tambour 1.

Le carter 19 délimite un passage 20 pour une meule d'affûtage 21 décrite dans ce qui suit.

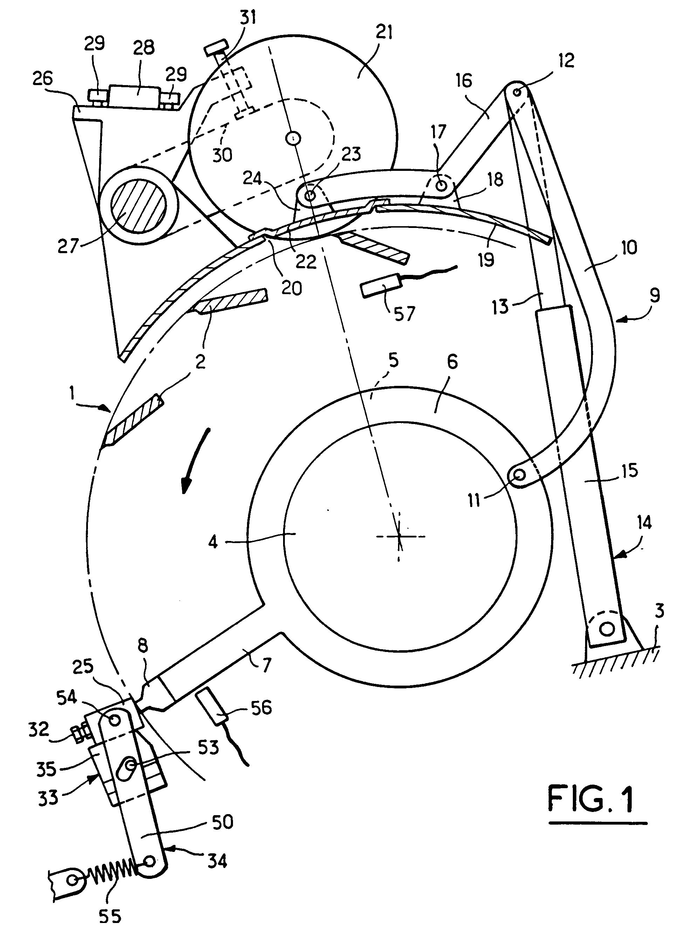

Lorsque le dispositif hacheur est en état de fonctionner et se trouve dans la position illustrée par la figure 1, le passage 20 doit être fermé par une trappe 22 et la meule 21 doit être escamotée. L'extrémité libre du levier 16 est articulée sur un axe 23 d'une patte 24 de la trappe 22. La liaison rigide des deux leviers 16 et ainsi l'accouplement synchrone des deux anneaux 5 et 6 sont dès lors assurés par ladite trappe 22. Dans la position précitée illustrée par la figure 1, dans laquelle le dispositif hacheur est en état de fonctionner, la meule 21 est escamotée, la trappe 22 est fermée, les vérins 14 sont en extension et les bras 7 sont dirigés vers un couteau fixe 25 décrit dans ce qui suit.

Par contre, dans la position illustrée-par la figure 2, dans laquelle le dispositif hacheur est neutralisé, les vérins 14 sont en rétraction de sorte que la trappe 22 est ouverte et que les bras 7 sont dirigés vers la meule 21, laquelle est en position d'affûtage pour affûter les couteaux 2 pendant que le tambour 1 tourne et en même temps, rectifier les touches 8 de positionnement du contre-couteau 25 à la distance de l'axe géométrique de rotation du tambour 1 où se trouvent les arêtes de coupe affûtées des couteaux 2.

La meule 21 pourrait s'étendre sur toute la longueur du tambour 1 augmentée d'au moins l'épaisseur totale des deux touches 8. La meule doit être escamotée avant la fermeture de la trappe 22 et, dans ce cas, cela peut être obtenu par pivotement de son support autour d'un axe fixe ou par déploiement d'un châssis en forme de quadrilatère déformable ou tout autre moyen, ces moyens étant alors commandés par un vérin en relation de temps avec la commande des vérins précités 14.

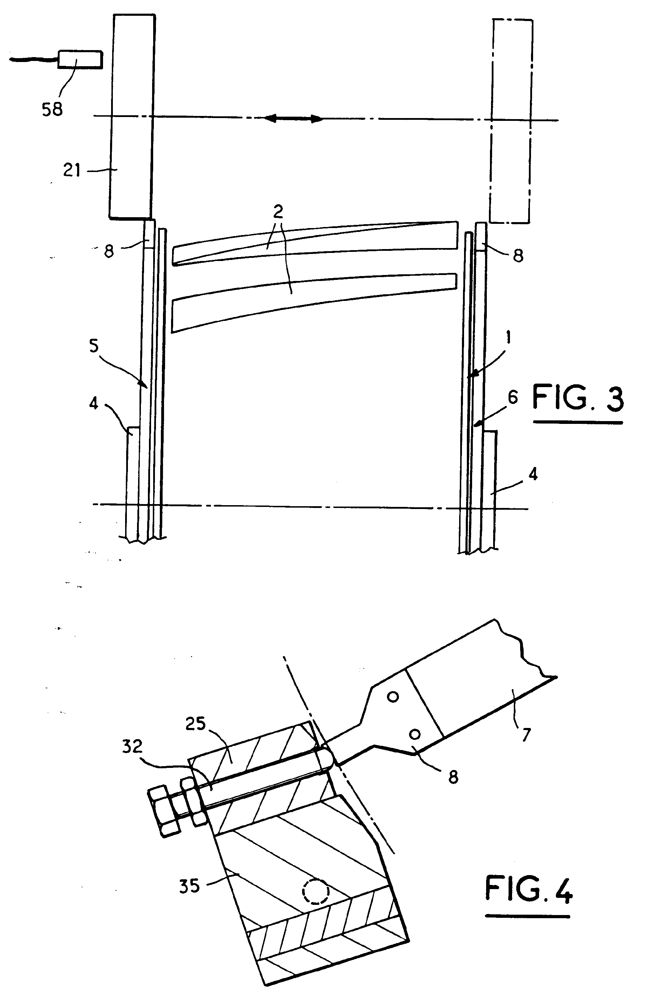

Dans la forme de réalisation représentée sur le dessin et plus particulièrement sur la figure 3, la meule 21 est relativement peu épaisse et est déplaçable en translation parallèlement à l'axe géométrique du tambour 1 suivant une course au moins égale à la longueur de ce tambour augmentée de l'épaisseur totale des deux touches 8 et de l'épaisseur de ladite meule, ceci à partir d'une position d'escamotage illustrée en trait plein et correspondant à l'une des fins de course dans laquelle la meule se trouve hors de l'espace occupé par le tambour 1 et les touches 8.

Le montage de la meule 21 est illustré par les figures 1 et 2. Un premier chariot 26 est monté coulissant le long d'une barre cylindrique 27 et d'une règle méplate 28 s'étendant parallèlement l'une à l'autre et fixées sur le bâti 3. A cet effet, le chariot 26 peut par exemple être muni de galets 29 guidés le long de la règle 28 et d'une douille à billes guidée le long de la barre 27. Un deuxième chariot 30 supportant la meule 21 et son dispositif d'entrainement en rotation est jumelé au premier chariot 26 en suivant celui-ci en translation et en pouvant pivoter relativement à lui pour régler la profondeur de passe d'affûtage c'est-à-dire la distance des axes de rotation de ladite meule 21 et du tambour hacheur 1. A cet effet, le chariot 30 est monté coulissant le long et pivotant autour de la barre cylindrique 27 par l'intermédiaire par exemple d'une douille à billes et ce chariot 30 peut être relié au chariot 26 par un organe réglable d'accouplement 31, qui dans cet exemple, est schématisé sous forme d'une vis montée dans un prolongement du chariot 26 et dont l'extrémité libre est attelée au chariot 30.

Dans la position de fonctionnement du dispositif hacheur illustrée par la figure 1, la meule 21 est escamotée, la trappe 20 est fermée, les vérins 14 sont en extension et les bras 7 des anneaux 5 et 6 sont dirigés vers le contre-couteau 25 qui est maintenu appuyé contre les touches 8 préalablement rectifiées desdits bras.

D'ailleurs et ainsi que cela ressort des figures 4 à 6, les touches 8 sont en contact avec des butées réglables 32 montées dans le contre-couteau 25 et constituées par exemple par des vis (figure 4) coopérant avec des taraudages du contre-couteau et avec un contre-écrou de blocage.

Pour assurer le réglage du contre-couteau 25, c'est-à-dire mettre ses butées 32 préalablement réglées en contact avec les touches 8, et le bloquer dans cette position, le contre-couteau est assujetti à un dispositif de fixation 33 et à un dispositif presseur 34.

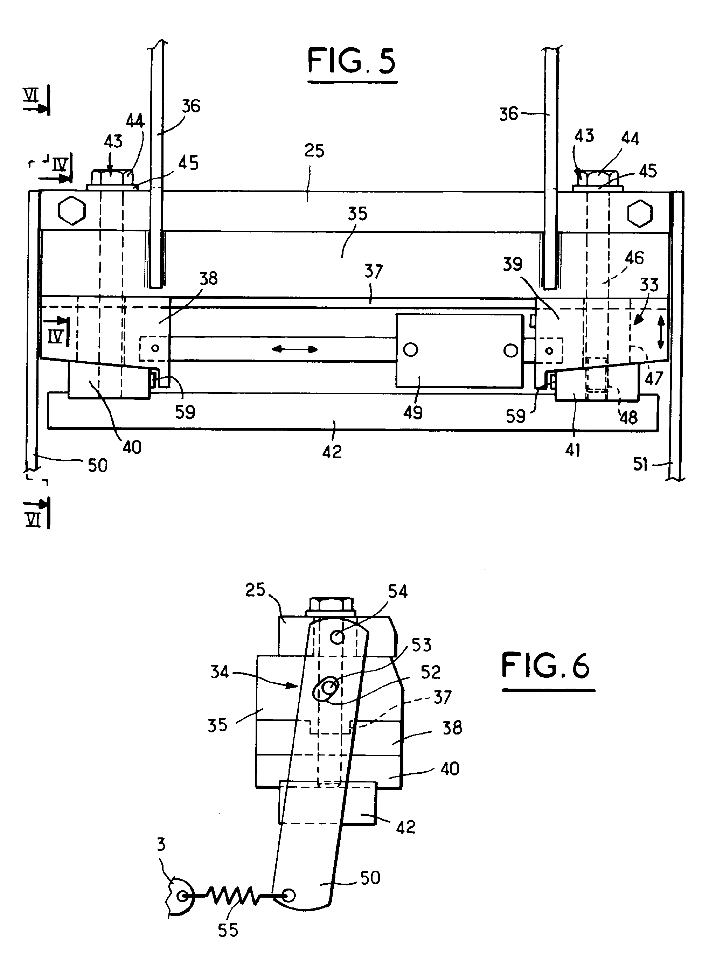

Le dispositif de fixation 33 peut être du type illustré par la figure 5. Le contre-couteau 25 repose alors sur une règle fixe 35 montée sur le bâti 3 au moyen de ferrures 36. La règle 35 comporte une glissière inférieure 37 qui, dans l'exemple représenté, s'étend parallèlement à l'axe géométrique du tambour 1 et dans laquelle deux coins mobiles 38 et 39 sont montés coulissants. Ces coins mobiles coopèrent, par leurs pentes opposées, avec les pentes conjuguées de coins fixes 40 et 41 faisant corps avec une règle flottante 42. La règle 42 est reliée au contre-couteau 25 par des vis 43 ; la tête 44 de chaque vis s'appuie, par l'intermédiaire d'un organe élastique tel qu'une rondelle parapluie 45, sur ledit contre-couteau ; la tige de chaque vis 43 traverse des trous cylindriques 46 de celui-ci et de la règle 35, ainsi qu'un trou oblong 47 du coin mobile correspondant 38 ou 39 ; l'extrémité filetée de chaque vis 43 est vissée dans un trou taraudé 48 du coin fixe correspondant.

En éloignant ou en rapprochant les coins mobiles 38 et 39 l'un de l'autre grâce à un vérin 49 dont les parties coopérantes sont fixées à ceux-ci, on provoque le blocage ou le déblocage respectivement du contre-couteau 25.

Le dispositif presseur 34 peut être du type illustré par la figure 6. Il comporte deux leviers 50 et 51 situés près des extrémités du contre-couteau 25. Chaque levier est monté pivotant dans un plan perpendiculaire à l'axe géométrique du tambour 1. A cet effet, il présente une lumière 52 enfilée sur un axe d'articulation 53 faisant saillie en bout de la règle fixe 35 ; à son extrémité supérieure, il est articulé sur un axe 54 du contre-couteau 25 ; à son extrémité inférieure, est accroché un ressort 55 prenant appui sur le bâti fixe 3. Ainsi, les ressorts 55 agissant sur les leviers 50 et 51 provoquent l'avancée du contre-couteau 25 jusqu'à ce que les butées 32 soient en contact avec les touches 8 de positionnement.

Avantageusement, les bords de la lumière 52 de chacun des leviers 50 et 51 sont inclinés du haut proche du tambour 1 vers le bas éloigné dudit tambour de façon que la force élastique des ressorts 55 ait pour effet non seulement d'appliquer les butées 32 contre des touches 8 de positionnement, mais également de presser le contre-couteau 25 sur la règle fixe 35.

Le réglage du contre couteau 25 est automatique puisqu'il suffit d'alimenter successivement les vérins 14 et 49. Bien entendu, il faut que la succession des opérations soit convenablement assurée par un dispositif de commande électrique, électronique ou autre.

Ce dispositif de commande est en relation notamment avec des détecteurs de proximité 56 à 59, des microcontacts ou autres convenablement situés pour attester qu'une fonction est bien accomplie.

Les détecteurs 56 (figures 1 et 2) sont situés en regard des bras positionneurs 7 lorsque leurs touches 8 sont en contact avec les butées 32 du contre-couteau 25. Ils attestent, lorsqu'ils sont sollicités, que la trappe 22 est fermée.

Les détecteurs 57 (figures 1 et 2) sont situés en regard des bras positionneurs 7 lorsque leurs touches 8 sont en regard de la meule 21. Ils attestent que la trappe 22 est ouverte et que lesdites touches sont en position de rectification.

Un détecteur 58 (figure 3) est situé près des chariots 26, 30 en position de fin de course longitudinale pour l'arrêt du cycle d'affûtage. Il atteste que la meule 21 est escamotée.

Des détecteurs 59 (figure 5) sont situés en regard des coins mobiles 38, 39 lorsqu'ils sont parvenus en fin de course de serrage. Ils attestent que le contre-couteau 25 est bloqué ou débloqué.

## Revendications

1. Procédé pour l'affûtage des couteaux d'un tambour rotatif et le réglage du contre-couteau fixe coopérant avec ceux-ci, en particulier dans une machine récolteuse de fourrage,
caractérisé en ce qu'il consiste :
- à amener, par pivotement autour de l'axe de rotation du tambour (1), au moins deux positionneurs alignés (8) du contre-couteau (25), en regard d'une meule d'affûtage (21) des couteaux (2), meule dont la situation angulaire est fixe,
- à rectifier les extrémités de ces positionneurs (8) avec la meule (21), en même temps que celle-ci affûte les couteaux (1) pendant la rotation du tambour (1),
- à ramener ensuite lesdits positionneurs (8) en regard du contre-couteau (25) par pivotement inverse,
- et à régler à nouveau le contre-couteau (25) en appliquant des butées (32) dont il est muni contre ces positionneurs (8).

2. Dispositif mettant en oeuvre le procédé selon la revendication 1, dans une machine récolteuse de fourrage comprenant un tambour hacheur rotatif (1) et un contre-couteau fixe (25) coopérant avec les couteaux (2) du tambour (1), ainsi qu'une meule escamotable (21) susceptible d'être mise en rotation pour affûter périodiquement lesdits couteaux,
caractérisé en ce qu'au moins deux positionneurs (7) situés près des extrémités libres du tambour hacheur (1) sont montés pivotants autour de l'axe géométrique de celui-ci et reliés à un dispositif d'actionnement (9) permettant d'amener par pivotement la touche extrême (8) de chaque positionneur, soit en regard de la meule (21) pour être rectifiée au même diamètre que les couteaux (2) sont affûtés par celle-ci, soit en regard d'une butée correspondante (32) du contre-couteau (25), lequel est assujetti à un support fixe (35) par l'intermédiaire d'une part, d'un dispositif presseur (34) tendant à appliquer ses butées (32) contre les touches (8) des positionneurs et d'autre part, d'un dispositif de fixation (33).

3. Dispositif selon la revendication 2, caractérisé en ce que chaque positionneur est un bras (7) faisant corps avec un anneau (5, 6) monté pivotant autour d'un tourillon (4) du tambour hacheur (1), ce bras s'étendant vers la périphérie et comportant en bout une touche consommable (8) montée de façon interchangeable.

4. Dispositif selon la revendication 3, caractérisé en ce que le dispositif d'actionnement (9) comporte, pour chaque positionneur (7), une bielle (10) dont une extrémité coudée est articulée (en 11) sur l'anneau (5, 6) du positionneur considéré et dont l'autre extrémité convenablement guidée est attelée (en 12) à un vérin (14) prenant appui sur le bâti fixe (3) de la machine.

5. Dispositif selon la revendication 4, caractérisé en ce que l'extrémité de la bielle d'actionnement (10) attelée au vérin (14) est articulée (en 12) en bout d'un levier (16) monté pivotant dans sa partie médiane autour d'un axe fixe (17), les extrémités libres des leviers des deux positionneurs étant articulées (en 23) sur une trappe longitudinale rigide (22) assurant, d'une part, la fermeture d'un passage (20) ménagé pour la meule escamotable (21) dans le carter (19) du tambour hacheur (1) et, d'autre part, l'accouplement des deux bielles d'actionnement (10).

6. Dispositif selon la revendication 2, caractérisé en ce que le dispositif précité de fixation (33) du contre-couteau (25) comporte :
- d'une part, une règle fixe (35) montée sur le bâti (3) de la machine récolteuse pour supporter le contre-couteau (25) et délimitant une glissière de guidage (37) pour deux coins mobiles (38, 39) ayant des pentes opposées et susceptibles d'être rapprochés ou éloignés l'un de l'autre par un vérin (49),
- d'autre part, une règle flottante (42) faisant corps avec des coins conjugués (40, 41) et reliée au contre-couteau (25) reposant sur la règle fixe (35) par des vis (43) traversant celle-ci.

7. Dispositif selon la revendication 6, caractérisé en ce que le dispositif de fixation (33) comporte également des organes élastiques (45) interposés entre les têtes (44) des vis (43) et le contre-couteau (25).

8. Dispositif selon l'une quelconque des revendications 2, 6 et 7, caractérisé en ce que le dispositif presseur (34) précité appliquant les butées (32) du contre-couteau (25) contre les touches (8) des positionneurs (7) comporte au moins deux leviers (50, 51) dont une extrémité est articulée (en 54) sur le contre-couteau (25), dont l'autre extrémité est reliée à un organe élastique (55) et dont la partie médiane est montée pivotante autour d'un axe d'articulation (53) du support fixe précité (35).

9. Dispositif selon la revendication 8, caractérisé en ce que chaque levier (50, 51) du dispositif presseur (34) délimite, pour le passage de l'axe d'articulation (53) du support fixe (35), une lumière (52) dont un bord d'appui est incliné pour que la réaction dudit axe à la force élastique ait pour effet non seulement d'appliquer les butées du contre-couteau contre les touches des positionneurs, mais également de presser ledit contre-couteau sur le support fixe.

10. Dispositif selon la revendication 8 ou 9, caractérisé en ce que les butées (32) du contre-couteau (25) sont réglables.

11. Dispositif selon la revendication 2, caractérisé en ce que la meule rotative (21) est montée sur un chariot (30) mobile parallèlement à l'axe du tambour hacheur (1), le chariot étant réglable en distance relativement à celui-ci.

12. Dispositif selon la revendication 11, caractérisé en ce que le chariot porte-meule (30) est, d'une part, monté coulissant le long de et pivotant autour d'une barre cylindrique de guidage (27) et, d'autre part, relié à un chariot coopérant de réaction (26), par un organe réglable d'accouplement (31), ce chariot coopérant de réaction (26) étant monté coulissant parallèlement à la barre cylindrique de guidage (27).

13. Dispositif selon l'une quelconque des revendications 2 à 12, caractérisé en ce que des premiers détecteurs de proximité (56), microcontacts ou autres, sont placés en regard des bras positionneurs (7) se trouvant face aux butées (32) du contre-couteau (25) pour attester que la trappe (22) est fermée et des deuxièmes détecteurs de proximité (57), microcontacts ou autres, sont placés en regard desdits bras positionneurs (7) se trouvant face à la meule (21) pour attester que la trappe (22) est ouverte et que les touches (8) de ces bras sont en position de rectification.

14. Dispositif selon la revendication 11 ou 12, caractérisé en ce qu'un détecteur de proximité (58), un microcontact ou autre, est disposé près de la fin de course longitudinale du chariot porte-meule (30) pour attester que la meule (21) est escamotée.

15. Dispositif selon la revendication 6, caractérisé en ce que des détecteurs de proximité (59), des microcontacts ou autres, sont disposés en regard des coins mobiles (38, 39) près de leur position de fin de course de serrage, pour attester que le contre-couteau (25) est bloqué ou débloqué.

## Patentansprüche

1. Verfahren zum Schleifen der Messer einer Drehtrommel und Einstellen des mit ihnen zusammenwirkenden festen Gegenmessers, insbesondere in einer Futter-Erntemaschine,
dadurch gekennzeichnet, daß es darin besteht:
- durch Schwenken um die Rotationsachse der Trommel (1) wenigstens zwei ausgerichtete Positionierer (8) des Gegenmessers (25) gegenüber einer Scheibe zum Schleifen (21) der Messer (2) zu bringen, wobei die Winkelstellung der Schleifscheibe fest ist;
- die Enden dieser Positionierer (8) mit der Schleifscheibe (21) einzuschleifen, zur gleichen Zeit, wie diese die Messer (1) während der Rotation der Trommel (1) schleift;
- dann die Positionierer (8) gegenüber dem Gegenmesser (25) durch Gegenschwenken zurückzubringen;
- und wiederum das Gegenmesser (25) durch Verwendung von Anschlägen (32), mit denen es ausgestattet ist, gegen die Positionierer einzustellen.

2. Vorrichtung zur Durchführung des Verfahrens nach Anspruch 1 in einer Futter-Erntemaschine, umfassend eine Häcksel-Drehtrommel (1) und ein mit den Messern (2) der Trommel (1) zusammenwirkendes, festes Gegenmesser (25), sowie eine versenkbare Schleifscheibe (21), die in Rotation versetzt werden kann, um die Messer periodisch zu schleifen, dadurch gekennzeichnet, daß wenigstens zwei, nahe der freien Enden der Häckseltrommel (1) angebrachte Positionierer (7) schwenkbar um die geometrische Achse von dieser angebracht sind und mit einer Antriebsvorrichtung (9) verbunden sind, die es ermöglicht durch Schwenken den äußeren Backen (8) jedes Positionierers entweder gegenüber der Schleifscheibe (21) zu bringen, um im gleichen Durchmesser eingeschliffen zu werden, wie die Messer (2) von dieser geschliffen werden, oder gegenüber einem entsprechenden Anschlag des Gegenmessers (25), wobei dieses an einem festen Träger (35) befestigt ist mittels einerseits einer Pressvorrichtung (34), die darauf abzielt, ihre Anschläge (32) gegen die Backen (8) der Positionierer anzulegen und andererseits mittels einer Befestigungsvorrichtung (33).

3. Vorrichtung nach Anspruch 2, dadurch gekennzeichnet, daß jeder Positionierer ein Arm (7) ist, der eine Einheit bildet mit einem Ring (5, 6), der schwenkbar um einen Zapfen (4) der Häckseltrommel (1) angebracht ist, wobei sich dieser Arm zum Rand hin erstreckt und am Ende einen verbrauchbaren Backen (8) umfaßt, der auswechselbar angebracht ist.

4. Vorrichtung nach Anspruch 3, dadurch gekennzeichnet, daß die Antriebsvorrichtung (9) für jeden Positionierer (7) eine Stange (10) umfaßt, deren eines gebogene Ende (in 11) an dem Ring (5, 6) des betrachteten Positionierers angelenkt ist und deren anderes, geeignet geführtes Ende an einem Zylinder (14) angekuppelt ist (in 12), der sich gegen den festen Rahmen (3) der Maschine abstützt.

5. Vorrichtung nach Anspruch 4, dadurch gekennzeichnet, daß das am Zylinder (14) angekuppelte Ende der Antriebsstange (10) (bei 12) am Ende eines Hebels (16) angelenkt ist, der in seinem mittleren Teil um eine feste Achse (17) schwenkbar befestigt ist, wobei die freien Enden der Hebel der beiden Positionierer (bei 23) auf einer steifen Längsklappe (22) angelenkt sind, die einerseits das Schließen eines für die versenkbare Schleifscheibe (21) ausgesparten Durchgangs (20) in dem Gehäuse (19) der Häckseltrommel (1) und andererseits das Ankuppeln der beiden Antriebsstangen (10) gewährleistet.

6. Vorrichtung nach Anspruch 2, dadurch gekennzeichnet, daß die oben genannte Befestigungsvorrichtung (33) des Gegenmessers (25) umfaßt:
- einerseits eine feste Schiene (35), die auf dem Rahmen (3) der Erntemaschine angebracht ist zum Stützen des Gegenmessers (25) und eine Führung (37) für zwei bewegliche Keile (38, 39) begrenzt, die entgegengesetzte Neigungen aufweisen und voneinander entfernt oder einander nähergebracht werden können durch einen Zylinder (49),
- andererseits eine lose Schiene (42), die eine Einheit bildet mit verbundenen Keilen (40, 41) und mit dem Gegenmesser (25) verbunden ist, das auf der festen Schiene (35) durch diese durchdringende Schrauben (43) festgemacht ist.

7. Vorrichtung nach Anspruch 6, dadurch gekennzeichnet, daß die Befestigungsvorrichtung (33) auch elastische Elemente (45) umfaßt, die zwischen den Köpfen (44) der Schrauben (43) und dem Gegenmesser (25) liegen.

8. Vorrichtung nach einem der Ansprüche 2, 6 und 7, dadurch gekennzeichnet, daß die oben genannte Pressvorrichtung (34), die die Anschläge (32) des Gegenmessers (25) gegen die Backen (8) der Positionierer (7) anlegt, wenigstens zwei Hebel (50, 51) umfaßt, deren eines Ende (in 54) auf dem Gegenmesser (25) angelenkt ist und deren anderes Ende mit einem elastischen Element (55) verbunden ist und deren Mittelteil schwenkbar um eine Drehachse (53) des oben genannten festen Trägers (35) befestigt ist.

9. Vorrichtung nach Anspruch 8, dadurch gekennzeichnet, daß jeder Hebel (50, 51) der Pressvorrichtung (34) für den Durchtritt der Drehachse (53) des festen Trägers (35) ein Schlitzloch (52) begrenzt, wobei ein Auflagerand geneigt ist, damit die Reaktion der Achse auf die elastische Kraft die Wirkung hat, daß nicht nur die Anschläge des Gegenmessers gegen die Backen der Positionierer angelegt werden, sondern daß auch das Gegenmesser auf den festen Träger gepreßt wird.

10. Vorrichtung nach Anspruch 8 oder 9, dadurch gekennzeichnet, daß die Anschläge (32) des Gegenmessers (25) einstellbar sind.

11. Vorrichtung nach Anspruch 2, dadurch gekennzeichnet, daß die drehbare Schleifscheibe (21) auf einem beweglichen, parallel zur Achse der Häckseltrommel (1) liegenden Schlitten (30) befestigt ist, wobei der Schlitten im Abstand bezüglich zu dieser einstellbar ist.

12. Vorrichtung nach Anspruch 11, dadurch gekennzeichnet, daß der die Schleifscheibe tragende Schlitten (30) einerseits längs zu einem und schwenkbar um einen zylindrischen Führungsstab (27) verschiebbar befestigt ist, und andererseits mit einem als Gegendruck (26) zusammenwirkenden Schlitten durch ein einstellbares Ankupplungselement (31) verbunden ist, wobei der als Gegendruck (26) zusammenwirkende Schlitten verschiebbar parallel zum zylindrischen Führungsstab (27) befestigt ist.

13. Vorrichtung nach einem der Ansprüche 2 bis 12, dadurch gekennzeichnet, daß erste Näherungsschalter (56), Mikrokontakte oder andere gegenüber den Positioniererarmen (7) angebracht sind, die sich vor den Anschlägen (32) des Gegenmessers (25) befinden, um zu gewährleisten, daß die Klappe (22) geschlossen ist, und zweite Näherungsschalter (57), Mikrokontakte oder andere gegenüber den Positioniererarmen (7) liegen, die sich vor der Schleifscheibe (21) befinden, um zu gewährleisten, daß die Klappe (22) offen ist und daß die Backen (8) dieser Arme in Einschleifstellung sind.

14. Vorrichtung nach Anspruch 11 oder 12, dadurch gekennzeichnet, daß ein Näherungsschalter (58), ein Mikrokontakt oder anderes nahe dem Ende des Längslaufes des die Schleifscheibe tragenden Schlittens (30) angebracht ist, um zu gewährleisten, daß die Schleifscheibe (21) versenkt ist.

15. Vorrichtung nach Anspruch 6, dadurch gekennzeichnet, daß Näherungsschalter (59), Mikrokontakte oder andere gegenüber den beweglichen Keilen (38, 39) nahe ihrer Endstellung des Spannlaufes angebracht sind, um zu gewährleisten, daß das Gegenmesser (25) blockiert oder entblockt ist.

## Claims

1. Process for sharpening the knives of a rotating drum and for adjusting the fixed counter-knife cooperating therewith, in particular in a fodder harvesting machine,
characterized in that it consists:
- in bringing at least two aligned positioners (8) of the counter-knife (25), opposite a wheel (21) for sharpening the knives (2), by pivoting said positioners about the axis of rotation of the drum (1), the angular situation of said wheel being fixed,
- in grinding the ends of these positioners (8) with the wheel (21), at the same time as the latter sharpens the knives (2) during rotation of the drum (1),
- thereafter in returning said positioners (8) opposite the counter-knife (25) by pivoting in the opposite direction,
- and in adjusting the counter-knife (25) again by applying stops (32), with which its is provided, against these positioners (8).

2. Device carrying out the process according to claim 1, in a fodder harvesting machine comprising a rotating chopping drum (1) and a fixed counter-knife (25) cooperating with the knives (2) of the drum (1), as well as a retractable wheel (21) adapted to be moved in rotation to sharpen said knives periodically,
characterized in that at least two positioners (7) located near the free ends of the chopping drum (1) are mounted to pivot about the geometrical axis thereof and connected to an actuating device (9) for bringing, by pivoting, the end contact piece (8) of each positioner either opposite the wheel (21) in order to be ground to the same diameter as the knives (2) are sharpened thereby, or opposite a corresponding stop (32) of the counter-knife (25), which is fastened to a fixed support (35) via, on the one hand, a presser device (34) tending to apply its stops (32) against the contact pieces (8) of the positioners and, on the other hand, a fixing device (33).

3. Device according to claim 2, characterized in that each positioner is an arm (7) integral with a ring (5, 6) mounted to pivot about a journal (4) of the chopping drum (1), this arm extending towards the periphery and comprising at its end an expendable contact piece (8) mounted in interchangeable manner.

4. Device according to claim 3, characterized in that the actuation device (9) comprises, for each positioner (7), a connecting rod (10) of which a bent end is articulated (in 11) on the ring (5, 6) of the positioner in question and of which the other end, suitably guided, is coupled (in 12) to a jack (14) abutting on the fixed frame (3) of the machine.

5. Device according to claim 4, characterized in that the end of the actuation rod (10) coupled to the jack (14) is articulated (in 12) at the end of a lever (16) mounted to pivot in its median part about a fixed pin (17), the free ends of the levers of the two positioners being articulated (in 23) on a rigid longitudinal trap (22) ensuring, on the one hand, closure of a passage (20) made for the retractable wheel (21) in the casing (19) of the chopping drum (1) and, on the other hand, coupling of the two actuation rods (10).

6. Device according to claim 2, characterized in that said device (33) for fixing the counter-knife (25) comprises:
- on the one hand, a fixed ruler (35) mounted on the frame (3) of the harvesting machine to support the counter-knife (25) and defining a guideway (37) for two mobile wedges (38, 39) having opposite inclinations and capable of being moved towards or away from each other by a jack (49),
- on the other hand, a floating ruler (42) integral with conjugate wedges (40, 41) and connected to the counter-knife (25) resting on the fixed ruler (35), by screws (43) passing therethrough.

7. Device according to claim 6, characterized in that the fixing device (33) also comprises elastic members (45) interposed between the heads (44) of the screws (43) and the counter-knife (25).

8. Device according to any one of claims 2, 6 and 7, characterized in that said presser device (34) applying the stops (32) of the counter-knife (25) against the contact pieces (8) of the positioners (7) comprises at least two levers (50, 51) of which one end is articulated (in 54) on the counter-knife (25), the other end is connected to an elastic member (55) and of which the median part is mounted to pivot about a pivot pin (53) of said fixed support (35).

9. Device according to claim 8, characterized in that each lever (50, 51) of the presser device (34) defines, for the passage of the pivot pin (53) of the fixed support (35), a slot (52) of which one bearing edge is inclined so that the reaction of said pin to the elastic force has for its effect not only to apply the stops of the counter-knife against the contact pieces of the positioners, but also to press said counter-knife on the fixed support.

10. Device according to claim 8 or 9, characterized in that the stops (32) of the counter-knife (25) are adjustable.

11. Device according to claim 2, characterized in that the rotating wheel (21) is mounted on a carriage (30) mobile parallel to the axis of the chopping drum (1), the carriage being adjustable in distance relatively thereto.

12. Device according to claim 11, characterized in that the wheel-holder carriage (30) is, on the one hand, mounted to slide along and to pivot around a cylindrical guiding bar (27) and, on the other hand, connected to a carriage cooperating by reaction (26), by an adjustable coupling member (31), this carriage cooperating by reaction (26) being mounted to slide parallel to the cylindrical guiding bar (27).

13. Device according to any one of claims 2 to 12, characterized in that first proximity detectors (56), microcontacts or the like are placed opposite the positioner arms (7) facing the stops (32) of the counter-knife (25) to attest that the trap (22) is closed and second proximity detectors (57), microcontacts or the like are placed opposite said positioner arms (7) facing the wheel (21) to attest that the trap (22) is open and that the contact pieces (8) of these arms are in position of grinding.

14. Device according to claim 11 or 12, characterized in that a proximity detector (58), a microcontact or the like is disposed near the longitudinal end-of-stroke of the wheel-holder carriage (30) to attest that the wheel (21) is retracted.

15. Device according to claim 6, characterized in that proximity detectors (59), microcontacts or the like are disposed opposite the mobile wedges (38, 39) near their tightened end-of-stroke position, to attest that the counter-knife (25) is blocked or unblocked.
